# EUROPÄISCHE PATENTSCHRIFT

(11) **EP 2 628 758 B1**
(45) Veröffentlichungstag und Bekanntmachung des Hinweises auf die Patenterteilung: **08.10.2014**
(21) Anmeldenummer: 13167642.1
(22) Anmeldetag: 07.04.2009
(51) Int. Cl.: C08G 63/78, C08G 63/85, B01J 19/24

(54) **Verfahren zur kontinuierlichen Herstellung von biologisch abbaubaren Polyestern**
Method for the continuous production of biodegradable polyesters
Procédé de fabrication en continu de polyesters biodégradables

(30) Priorität: 15.04.2008 EP 08154537
(43) Veröffentlichungstag der Anmeldung: 21.08.2013
(62) Teilanmeldung aus: 09732629.2
(73) Patentinhaber: BASF SE, 67056 Ludwigshafen (DE)
(72) Erfinder: Witt, Uwe, 67112 Mutterstadt (DE); Yamamoto, Motonori, 68199 Mannheim (DE)

(56) Entgegenhaltungen:
- WO-A-03/042278
- WO-A-2007/140925
- DE-A1-102005 053 068
- US-A- 4 434 276

## Beschreibung

Die vorliegende Erfindung betrifft ein Verfahren zur kontinuierlichen Herstellung eines biologisch abbaubaren Polyesters auf Basis von aliphatischen oder aliphatischen und aromatischen Dicarbonsäuren und aliphatischen Dihydroxyverbindungen, wobei

eine Mischung aus den aliphatischen Dyhydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden, wobei
i) in eine ersten Stufe diese Mischung zusammen mit der Gesamtmenge oder einer Teilmenge eines Titankatalysators kontinuierlich verestert bzw. umgeestert wird;
ii) in einer zweiten Stufe kontinuierlich das gemäß i) erhaltene Umesterungs- bzw. Veresterungsprodukt in einem Turmreaktor und im Gleichstrom über einen Fallfilmverdampfer, wobei die Reaktionsdämpfe in situ aus dem Reaktionsgemisch entfernt werden bis zu einer Viskositätszahl nach DIN 53728 von 20 bis 80 cm³/g vorkondensiert wird;
iii) in einer dritten Stufe kontinuierlich das aus ii) erhältliche Produkt bis zu einer Viskositätszahl nach DIN 53728 von 100 bis 220 cm³/g polykondensiert wird und wobei zwischen Stufe ii) und iii) dem Produktstrom 0,001 bis 0,1 Gew.-% einer deaktivierenden Phosphorverbindung zugefügt werden, wobei die deaktivierende Phosphorverbindung phosphorige Säure ist.

Insbesondere betrifft die Erfindung ein Verfahren zur kontinuierlichen Herstellung eines biologisch abbaubaren Polyesters auf Basis von aliphatischen und aromatischen Dicarbonsäuren und aliphatischen Dihydroxyverbindungen, wobei
eine Mischung aus den aliphatischen Dyhydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden, wobei
i) in einer ersten Stufe diese Mischung zusammen mit der Gesamtmenge oder einer Teilmenge eines Titankatalysators kontinuierlich verestert bzw. umgeestert wird;
ii) in einer zweiten Stufe kontinuierlich das gemäß i) erhaltene Umesterungs- bzw. Veresterungsprodukt in einem Turmreaktor und im Gleichstrom über einen Fallfilmverdampfer, wobei die Reaktionsdämpfe in situ aus dem Reaktionsgemisch entfernt werden bis zu einer Viskositätszahl nach DIN 53728 von 30 bis 80 cm³/g vorkondensiert wird;
iii) in einer dritten Stufe kontinuierlich das aus ii) erhältliche Produkt bis zu einer Viskositätszahl nach DIN 53728 von 120 bis 180 cm³/g polykondensiert wird.

Im Stand der Technik sind zur Herstellung von biologisch abbaubaren Polyestern auf Basis von aliphatischen und aromatischen Dicarbonsäuren und aliphatischen Dihydroxyverbindungen insbesondere diskontinuierliche (Batch)-Verfahren beschrieben (WO-A 92/09654 und WO-A 96/15173). Diese haben den Nachteil, dass der aliphatisch/aromatische Polyester relativ lange im Reaktionskessel unter hohen Temperaturen verweilen muss, um ein hohes Molekulargewicht aufzubauen - die gewünschte Viskositätszahl nach DIN 53728 liegt bei größer 120 cm³/g. Aufgrund der langen Verweilzeiten bei hohen Temperaturen, werden die empfindlichen aliphatisch/aromatischen Polyester zum Teil wieder abgebaut. Die Säurezahl der Polyester steigt rapide an und kann leicht Werte von größer 1,6 mg KOH/g erreichen. Biologisch abbaubare Polyester mit hoher Säurezahl weisen eine sehr beschränkte Hydrolysestabilität auf.

Aus der Literatur sind effiziente, kontinuierliche Verfahren zur Herstellung von aromatischen Polyestern wie PET und PBT beschrieben (siehe beispielsweise WO 03/042278 und DE-A 199 29 790). Diese lassen sich jedoch nicht unmittelbar auf aliphatisch/aromatische Polyester übertragen. Zum einen weisen die aromatischen Polyester häufig höhere Säurezahlen auf und zum anderen ist das Problem der Hydrolyseinstabilität bei aromatischen Polyestern nicht so ausgeprägt wie bei aliphatisch/aromatischen Polyestern.

Aufgabe der vorliegenden Erfindung war es demnach ein großtechnisches Verfahren bereit zu stellen, das die Herstellung von biologisch abbaubaren aliphatisch/aromatischen Polyestern mit Viskositätszahlen nach DIN 53728 von größer 120 und gleichzeitig niedrigen Säurezahlen nach DIN EN 12634 (vorzugsweise von kleiner 1,0 mg KOH/g, insbesondere kleiner 0,9 mg KOH/g ermöglicht. Für ein großtechnisches Verfahren sind weiterhin die Prozessfähigkeit und die Wirtschaftlichkeit (Produktausbeute und Raum/Zeit-Ausbeute) von großer Bedeutung.

Überraschenderweise löst das eingangs erwähnte kontinuierliche, 3-Stufige Verfahren die Aufgabe in jeder Hinsicht.

Unter biologisch abbaubaren Polyestern werden aliphatisch/aromatische Polyester verstanden - wie sie beispielsweise in der WO-A 96/15173 und DE-A 10 2005053068 beschrieben sind.

Insbesondere werden unter biologisch abbaubaren Polyestern aliphatisch/aromatische Polyester verstanden, die wie folgt aufgebaut sind,:
A) einer Säurekomponente aus
   a1) 30 bis 99 mol-% mindestens einer aliphatischen Dicarbonsäure oder deren Ester oder Mischungen davon
   a2) 1 bis 70 mol-% mindestens einer aromatischen Dicarbonsäure oder deren Ester oder Mischungen davon und
   a3) 0 bis 5 mol-% einer sulfonatgruppenhaltigen Verbindung,
   wobei die Molprozente der Komponenten a1) bis a3) zusammen 100% ergeben und
B) einer Diolkomponente aus
   b1) mindestens äquimolare Mengen zur Komponente A eines C₂-bis C₁₂-Alkandiol oder Mischungen davon und
   b2) 0 bis 2 Gew.-% bezogen auf die bezogen auf die Polyestermenge nach Stufe iii (entspricht der eingesetzten Menge der Komponenten A und B abzüglich der abgetrennten Reaktionsdämpfe) einer mindestens 3 funktionelle Gruppen enthaltenden Verbindung,
C) 0 bis 30 Gew.-% einer oder mehrerer Komponenten C) ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen,
   c2) mindestens einer Hydroxycarbonsäure der Formel IIa oder IIb 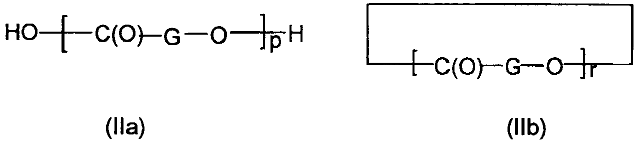 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁- bis C₈-Alkan
   c5) mindestens einer Aminocarbonsäureverbindung ausgewählt aus der Gruppe, bestehend aus Caprolactam, 1,6 Aminocapronsäure, Laurinlactam, 1,12-Aminolaurinsäure und 1,11-Aminoundecansäure
   oder Mischungen aus c1) bis c5),
D) 0 bis 4 Gew.-% bezogen auf die Polyestermenge nach Stufe iii) eines di- oder oligofunktionellen Epoxids, Oxazolins, Oxazins, Caprolactams und/oder Carbodiimids.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2. In einer besonders bevorzugten Ausführungsform enthält die Säurekomponente A der teilaromatischen Polyester mehr als 50 mol-% an aliphatischer Dicarbonsäure a1). Derartige Polyester zeichnen sich durch ein exzellentes biologisches Abbauverhalten aus.

Als aliphatische Säuren und die entsprechenden Derivate a1 kommen im Allgemeinen solche mit 2 bis 40 Kohlenstoffatomen, vorzugsweise 4 bis 14 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Korksäure, Acelainsäure, Sebacinsäure, Undecandisäure, Dodecandisäure, Brassylsäure, Tetradecandisäure, Fumarsäure, 2,2-Dimethylglutarsäure, Suberinsäure, Dimerfettsäure (wie z.B. Empol® 1061 der Fa. Cognis1,3-Cyclopentandicarbonsäure, 1,4-Cyclohexandicarbonsäure, 1,3-Cyclohexandicarbonsäure, Diglykolsäure, Itaconsäure, Maleinsäure, Maleinsäureanhydrid und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ii) wie beispielsweise Polyhydroxybutyrat oder insbesondere Polylactid hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ii) wie beispielsweise Polyhydroxybutyratcovaleriat oder Poly-3-hydroxybutyrat-co-4-hydroxybutyrat hergestellt werden.

Bernsteinsäure, Azelainsäure, Sebacinsäure und Brassylsäure haben zudem den Vorteil dass sie als nachwachsende Rohstoffe zugänglich sind.

Als aromatische Dicarbonsäure a2 sind im Allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3. Nach einer weiteren bevorzugten Ausführungsform enthält die Säurekomponente A von 40 bis 59,9 mol-% a1, von 40 bis 59,9 mol-% a2 und von 0 bis 1 mol-% a3, insbesondere von 40 bis 59,8 mol-% a1, von 40 bis 59,8 mol-% a2 und von 0 bis 0,5 mol-% a3.

Im Allgemeinen werden die Diole B unter verzweigten oder linearen Alkandiolen mit 2 bis 12 Kohlenstoffatomen, bevorzugt 4 bis 6 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 1,6-Hexandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandi-methanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

In der Regel wird in den Verfahrensstufen i) und ii) ein Verhältnis von Komponente b1 (Diol) zu Disäuren A von 1,5 bis 2,5 und vorzugsweise 1,8 bis 2,2 eingestellt.

Die Verbindungen b2) enthalten bevorzugt mindestens drei funktionelle Gruppen enthaltende Vernetzer. Besonders bevorzugte Verbindungen haben drei bis sechs Hydroxylgruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Die Verbindungen b2 können als Verzweiger oder auch Vernetzer wirken. Mittels der Komponenten b2 lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen b2 wirken scherentzähend, d.h. die Viskosität unter Belastung wird geringer.

Die Verbindungen b2 werden vorzugsweise in Mengen von 0,01 bis 2, bevorzugt 0,05 bis 1, besonders bevorzugt 0,08 bis 0,20 Gew.-%, bezogen auf die Polymermenge nach Stufe iii) eingesetzt.

Neben den Komponenten A und B können die Polyester, auf denen die erfindungsgemäßen Polyestermischungen basieren, weitere Komponenten enthalten.

Als Dihydroxyverbindungen c1 eignen sich Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der teilaromatischen Polyester verwendet werden.

Zur Herstellung von Copolyestern kann Hydroxycarbonsäure c2) eingesetzt werden: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als NatureWorks® (Fa. Cargill) erhältlich) sowie eine Mischung aus 3-Polyhydroxybuttersäure und Polyhydroxy-valeriansäure (letzteres ist unter dem Namen Biopol® von Zeneca erhältlich), besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopen-tanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Als Komponente c5 können Aminocarbonsäureverbindungen ausgewählt aus der Gruppe, bestehend aus Caprolactam, 1,6 Aminocapronsäure, Laurinlactam, 1,12-Aminolaurinsäure und 1,11-Aminoundecansäure verwendet werden.

Im Allgemeinen wird c5 in Mengen von 0 bis 20, bevorzugt von 0,1 bis 10 Gew.-%, bezogen auf die Gesamtmenge der Komponenten A und B, eingesetzt.

In einer bevorzugten Ausführungsform des Verfahrens wird zu Beginn, während oder vorzugweise am Ende der Stufe iii ein Säurefänger (Komponente D) ausgewählt aus der Gruppe bestehend aus eine di- oder oligofunktionellem Epoxids, Oxazolins, Oxazins, Caprolactams und/oder Carbodiimids hinzugefügt und bei in der Regel 220 bis 270°C zugegeben. Die Komponente D wird in 0,01 bis 4 Gew.-%, bevorzugt in 0,1 bis 2 Gew.-%, und besonders bevorzugt in 0,2 bis 1 Gew.-%, bezogen auf das Biopolymer eingesetzt.

Als Komponente d kommen difunktionelle oder oligofunktionelle Epoxide in Frage wie: Hydrochinon, Diglycidylether, Resorcindiglycidylether, 1,6-Hexandiol-diglycidylether und hydrierter Bisphenol-A-Diglycidylether. Andere Beispiele von Epoxiden umfassen Diglycidylterephthalat, Diglycidyltetrahydrophthalat, Diglycidylhexahydrophthalat, Dimethyldiglycidylphthalat, Phenylendiglycidylether, Ethylendiglycidylether, Trimethylendiglycidylether, Tetramethylendiglycidylether, Hexamethylendiglycidylether, Sorbitoldiglycidylether, Polyglycerin-polyglycidylether, Pentaerythrit-polyglycidylether, Diglycerol-polyglycidylether, Glycerol-polyglycidylether, Trimethylolpropan-polyglycidylether, Resorcinol-diglycidylether, Neopentylglycol-diglycidylether, Ethylenglycoldiglycidylether, Diethylenglycol-diglycidylether, Polyethylenglycol-diglycidylether, Propylenglycol-diglycidylether, Dipropylenglycol-diglycidylether, Polypropylenglycoldiglycidylether und Polybutydienglycol-diglycidylether.

Als Komponente d ist insbesondere geeignet ein Epoxidgruppen-haltiges Copolymer auf Basis Styrol, Acrylsäureester und/oder Methacrylsäureester. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet sind Joncryl^{®} ADR 4368, langkettige Acrylate wie in der EP Anm. Nr. 08166596.0 beschrieben und Cardura^{®} E10 der Fa. Shell.

Bisoxazoline sind im Allgemeinen erhältlich durch das Verfahren aus Angew. Chem. Int. Ed., Vol. 11 (1972), S. 287-288. Besonders bevorzugte Bisoxazoline und Bisoxazine sind solche, in denen das Brückenglied eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Weitere Beispiele sind: 2,2'-Bis(2-oxazolin, 2,2'-Bis(4-methyl-2-oxazolin), 2,2'-Bis(4,4'-dimethyl-2-oxazolin), 2,2'-Bis(4-ethyl-2-oxazolin), 2,2'-Bis(4,4'-diethyl-2-oxazolin), 2,2'-Bis(4-propyl-2-oxazolin), 2,2'-Bis(4-butyl-2-oxazolin), 2,2'-Bis(4-hexyl-2-oxazolin), 2,2'-Bis(4-phenyl-2-oxazolin), 2,2'-Bis(4-cyclohexyl-2-oxazolin), 2,2'-Bis(4-benzyl-2-oxazolin), 2,2'-p-Phenylen-bis(4-methyl-2-oxazolin), 2,2'-p-Phenylen-bis(4,4'dimethyl-2-oxazolin), 2,2'-m-Phenylen-bis(4-methyl-2-oxazolin), 2,2'-m-Phenylen-bis(4,4'-dimethyl-2-oxazolin), 2,2'-Hexamethylen-bis(2-oxazolin), 2,2'-Octamethylen-bis(2-oxazolin), 2,2'-Decamethylen-bis(2-oxazolin), 2,2'-Ethylenbis(4-methyl-2-oxazolin), 2,2'-Tetramethylen-bis(4,4'dimethyl-2-oxazolin), 2,2'-9,9'-Diphenoxyethan-bis(2-oxazolin), 2,2'-Cyclohexylen-bis(2-oxazolin) und 2,2'-Diphenylen-bis(2-oxazolin).

Bevorzugte Bisoxazine sind 2,2'-Bis(2-oxazin), Bis(2-oxazinyl)methan, 1,2-Bis(2-oxazinyl)ethan, 1,3-Bis(2-oxazinyl)propan oder 1,4-Bis(2-oxazinyl)butan, insbesondere 1,4-Bis(2-oxazinyl)benzol, 1,2-Bis(2-oxazinyl)benzol oder 1,3-Bis(2-oxazinyl)benzol.

Carbodiimide und polymere Carbodiimide werden beispielsweise von der Fa. Lanxxess unter dem Markennamen Stabaxol^{®} oder von der Fa. Elastogran unter dem Markennamen Elastostab^{®}vertrieben.

Beispiele sind: N,N'-Di-2,6-diisopropylphenylcarbodiimid, N,N'-Di-o-tolylcarbodiimid, N,N'-Diphenylcarbodiimid, N,N'-Dioctyldecylcarbodiimid, N,N'-Di-2,6-dimethylphenylcarbodiimid, N-Tolyl-N'-cyclohexylcarbodiimid, N,N'-Di-2,6-di-tert.-butylphenylcarbodiimid, N-Tolyl-N'-phenylcarbodiimid, N,N'-Di-p-nitrophenylcarbodiimid, N,N'-Di-p-aminophenylcarbodiimid, N,N'-Di-p-hydroxyphenylcarbodiimid, N,N'-Di-cyclohexylcarbodiimid, N,N'-Di-p-tolylcarbodiimid, p-Phenylen-bis-di-o-tolylcarbodiimid, p-Phenylen-bis-dicyclohexylcarbodiimid, Hexamethylen-bis-dicyclohexylcarbodiimid, 4,4'-Dicyclohexylmethancarbodiimid, Ethylen-bisdiphenylcarbodiimid, N,N'-Benzylcarbodiimid, N-Octadecyl-N'-phenylcarbodiimid, N-Benzyl-N'-phenylcarbodiimid, N-Octadecyl-N'-tolylcarbodiimid, N-Cyclohexyl-N'-tolylcarbodiimid, N-Phenyl-N'-tolylcarbodiimid, N-Benzyl-N'-tolylcarbodiimid, N,N'-Di-o-ethylphenylcarbodiimid, N,N'-Di-p-ethylphenylcarbodiimid, N,N'-Di-o-isopropylphenylcarbodiimid, N,N'-Di-p-isopropylphenylcarbodümid, N,N'-Di-o-isobutylphenylcarbodiimid, N,N'-Di-p-isobutylphenylcarbodiimid, N,N'-Di-2,6-diethylphenylcarbodiimid, N,N'-Di-2-ethyl-6-isopropylphenylcarbodiimid, N,N'-Di-2-isobutyl-6-isopropylphenylcarbodiimid, N,N'-Di-2,4,6-trimethylphenylcarbodiimid, N,N'-Di-2,4,6-triisopropylphenylcarbodiimid, N,N'-Di-2,4,6-triisobutylphenylcarbodiimid, Diisopropylcarbodiimid, Dimethylcarbodiimid, Diisobutylcarbodiimid, Dioctylcarbodiimid, t-Butylisopropylcarbodiimid, Di-β-naphthylcarbodiimid und Di-t-butylcarbodiimid.

Die Komponente d wird in 0,01 bis 4 Gew.-%, bevorzugt in 0,1 bis 2 Gew.-%, und besonders bevorzugt in 0,2 bis 1 Gew.-%, bezogen auf den Polyester nach Stufe iii eingesetzt.

Insbesondere bevorzugt werden biologisch abbaubare teilaromatische Polyester, die als aliphatische Dicarbonsäure (Komponente a1)) Bernsteinsäure, Adipinsäure oder Sebacinsäure, deren Ester oder Mischungen davon; als aromatische Dicarbonsäure (Komponente a2)) Terephthalsäure oder deren Ester; als Diolkomponente (Komponente B) 1,4-Butandiol oder 1,3-Propandiol, und als Komponente b2) Glycerin, Pentaerytrit, Trimethylolpropan.

Das erfindungsgemäße Verfahren lässt sich auch zur Herstellung von aliphatischen Polyestern verwenden. Unter aliphatischen Polyestern werden Polyester aus aliphatischen C₂-C₁₂-Alkandiolen und aliphatischen C₄-C₃₆-Alkandicarbonsäuren wie Polybutylensuccinat (PBS), Polybutylenadipat (PBA), Polybutylensuccinatadipat (PBSA), Polybutylensuccinatsebacat (PBSSe), Polybutylensebacatadipat (PBSeA), Polybutylensebacat (PBSe) oder entsprechende Polyesteramide verstanden. Die aliphatischen Polyester werden von den Firmen Showa Highpolymers unter dem Namen Bionolle und von Mitsubishi unter dem Namen GSPla vermarktet. Neuere Entwicklungen sind in der EP08165370.1 beschrieben.

Die mit dem erfindungsgemäßen Verfahren hergestellten aliphatischen Polyester weisen in der Regel Viskositätszahlen nach DIN 53728 von 100 bis 220 cm³/g und vorzugsweise 150 bis 250 cm³/g auf.
Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.
Die Säurezahlen nach DIN EN 12634 liegen im Allgemeinen bei 0,01 bis 1,5 mg KOH/g, vorzugsweise bei 0,01 bis 1,0 mg KOH/g und insbesondere bevorzugt bei 0,01 bis 0,7 mg KOH/g.

Die genannten aliphatischen und teilaromatischen Polyester und die erfindungsgemäßen Polyestermischungen sind biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die teilaromatischen Polyester sind in der Regel statistische Copolyester, d.h. der Einbau der aromatischen und aliphatischen Disäureeinheiten erfolgt rein zufällig. Die Verteilung der Länge der einzelnen Blöcke lässt sich nach B. Vollmert, Grundriss der makromolekularen Chemie berechnen. Wie von Witt et al. In J. Environ. Pol. Degradation, Band 4, Nr. 1 (1996), s. 9 beschrieben, ist der Abbau im Kompost von aromatischen Modeloligomeren mit n≥3 normalerweise sehr langsam. Bei teilaromatischen Polyestern werden jedoch auch Blockstrukturen rasch abgebaut.

Die bevorzugten teilaromatischen Polyester weisen in der Regel ein Molekulargewicht (Mₙ) im Bereich von 1000 bis 80000, insbesondere im Bereich von 9000 bis 60000 g/mol, bevorzugt im Bereich von 20000 bis 40000 g/mol, ein Molekulargewicht (Mw) von 50000 bis 250000, vorzugsweise 75000 bis 180000 g/mol und ein Mw/Mn-Verhältnis von 1 bis 5, vorzugsweise 2 bis 4 auf. Der Schmelzpunkt liegt im Bereich von 60 bis 170, bevorzugt im Bereich von 80 bis 150°C.

Der MVR (Schmelzevolumenrate nach Stufe iii) liegt in der Regel bei 1,0 bis 15,0 cm³/10 min bevorzugt bei 2,5 bis 12,0 und besonders bevorzugt bei 3,5 bis 10,0 cm³/10 min.

Neben einer hohen Viskositätszahl ist es wünschenswert, aliphatisch aromatische Copolyester bereitzustellen, die eine niedrige Säurezahl nach DIN EN 12634 aufweisen. Je niedriger die Säurezahl der aliphatisch/aromatischen Copolyester, desto hydrolysestabiler sind die Polyester für sich alleine genommen oder in Mischungen mit Biopolymeren wie Stärke, Polylactid (PLA) oder Polyhydroxyalkanoaten. Die Lagerstabilität der Polester(mischungen) verbessert sich entsprechend.

Im Folgenden wird das erfindungsgemäße Verfahren näher beschrieben.

In einer Vorstufe werden die Komponenten A, B und gegebenenfalls C gemischt. In der Regel werden 1,0 mol-Äquivalente einer Mischung aus aliphatischen und aromatischen Dicarbonsäuren oder deren Ester (Komponente A), 1,1 bis 1,5, vorzugsweise 1,2 bis 1,4 mol-Äquivalente aliphatischen Dyhydroxyverbindungen (Komponente b1), 0 bis 2, vorzugsweise 0,01 bis 0,5 Gew.-% bezogen auf Polymermenge nach Stufe iii einer Verbindung b2 und gegebenenfalls weitere Comonomere (Komponente C) vorgemischt.

In einer bevorzugten Verfahrensweise werden die Dicarbonsäuren als freie Säuren (Komponente A) eingesetzt. Hierbei wird die Mischung in den oben genannten Mischungsverhältnissen - ohne Zugabe eines Katalysators - zu einer üblicherweise auf 20 - 70°C temperierten Paste vermischt.

Alternativ hierzu werden die flüssigen Ester der Dicarbonsäuren (Komponente A) und die Dihydroxyverbindung und gegebenenfalls weiteren Comonomeren, in den oben genannten Mischungsverhältnissen - ohne Zugabe eines Katalysators - in der Regel bei einer Temperatur von 140 - 200°C vermischt.

In einer weiteren Alternative wird eine oder beide Dicarbonsäuren mit der aliphatischen Dyhydroxyverbindungen zu einem rein aliphatischen oder aromatischen Polyester in einer Vorstufe verestert und dieser dann mit der jeweils anderen Dicarbonsäure und weiterer aliphatischen Dyhydroxyverbindung sowie gegebenenfalls Verbindung b2 gemischt. Beispielsweise kann Polybutylenterephthalat und/oder Polybutylenadipinat in diese Vorstufe eingesetzt werden.

In Stufe i) wird die zuvor beschriebene Paste, Aufschlämmung und/oder Flüssigkeit (Vorstufe) aus aliphatischen und aromatischen Dicarbonsäuren (A) und einer aliphatischen Dihydroxyverbindung (b1), gegebenenfalls Verbindung (b2) und weiteren Comonomeren (Komponente C) in Gegenwart von 0,001 bis 1 Gew.-%, vorzugsweise 0,03 bis 0,2 bezogen auf Polymermenge nach Stufe iii eines Katalysators bis zu einer Viskositätszahl nach DIN 53728 von in der Regel 5 bis 15 cm³/g verestert.

Die überschüssige Diolkomponente wird in der Regel abdestilliert und nach beispielsweise destillativer Aufreiningung wieder dem Kreislauf zugeführt.

In Stufe i) wird entweder die Gesamtmenge oder eine Teilmenge - vorzugsweise 50 bis 80 Teile des Katalysators zudosiert. Als Katalysatoren werden insbesondere TitanVerbindungen eingesetzt. Titan-Katalysatoren wie Tetrabutylorthotitanat oder Tetra(isopropyl)orthotitanat haben gegenüber den in der Literatur häufig verwendeten Zinn, Antimon, Kobalt und Blei-Verbindungen wie Zinn-dioctanat zudem den Vorteil, dass im Produkt verbleibende Restmengen des Katalysators oder Folgeprodukte des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Gleichzeitig werden in Stufe i) eine Temperatur von 180 und 260 °C und vorzugsweise 220 bis 250°C sowie ein Druck von 0,6 bis 1,2 bar und vorzugsweise 0,8 bis 1,1 bar eingestellt. Die Stufe i) kann in einem Mischaggregat wie beispielsweise einem Hydrocylon durchgeführt werden. Typische Verweilzeiten liegen bei 1 bis 2 Stunden.

Vorteilhaft werden Stufe i) und ii) in einem einzigen Reaktor wie beispielsweise einem Turmreaktor durchgeführt (siehe beispielsweise WO 03/042278 und DE-A 199 29 790) wobei der Reaktor die für die jeweilige Stufe geeigneten Einbauten aufweist.

Gegebenenfalls kann in Stufe i) und/oder ii) weitere Komponente b1 sowie die optionale Komponente c) zugefügt werden. Im Allgemeinen wird in Stufe i) ein Verhältnis von Komponente B (Diol) zu Disäuren A von 1,5 bis 2,5 und vorzugsweise 1,8 bis 2,2 eingestellt.

In Stufe ii) wird die in Stufe i (Veresterung) erhaltene Flüssigkeit zusammen mit gegebenenfalls der Restmenge an Katalysator in einen für die Vorkondensation geeigneten Reaktor eingespeist. Für die Vorkondensation haben sich Reaktoren wie ein Rohrbündelreaktor, eine Kesselkaskade oder eine Blasensäule und insbesondere eine Fallstromkaskade gegebenenfalls mit Entgasungseinheit als geeignet erwiesen (Fahrweise iia). In der Regel werden Reaktionstemperaturen von 230 bis 270°C, vorzugsweise 240 bis 260°C und Drucke zu Beginn der Stufe ii) von 0,1 bis 0,5, vorzugsweise 0,2 bis 0,4 bar und am Ende der Stufe ii) von 5 bis 100 mbar, vorzugsweise 5 bis 20 mbar eingestellt. Es lassen sich bei Verweilzeiten von 60 bis 160 Minuten aliphatisch/aromatische Präpolyester mit einer Viskositätszahl nach DIN 53728 von 30 bis 80 und vorzugsweise 40 bis 60 cm³/g herstellen. Die Säurezahlen nach DIN EN 12634 der Präpolyester können nach Stufe ii) in Abhängigkeit von der Herstellungsweise noch stark variieren. Startet man in der Vorstufe mit den freien Dicarbonsäuren, so liegen die Säurezahlen am Ende der Stufe ii) noch relativ hoch; sie sinken jedoch in Stufe iii) noch ab. Ist man in der Vorstufe mit den entsprechenden Dicarbonsäureester gestartet, so ist die Säurezahl m Ende der Stufe ii) vergleichsweise klein. Hier steigen jedoch die Säurezahlen im Verlauf der Stufe iii) an. In der Regel liegen die Säurezahlen nach DIN EN 12634 am Ende der Stufe ii) bei 0,7 bis 2 mg KOH/g.

Ein wesentliches Merkmal der Vorkondensation ii) ist die in WO-A 03/042278 und WO-A 05/042615 detailliert beschriebene Fahrweise in einem Turmreaktor, bei denen der Produktstrom im Gleichstrom über einen ein- oder mehrstufigen Fallfilmverdampfer geführt wird, wobei die Reaktionsdämpfe - insbesondere Wasser, THF und bei Einsatz von Dicarbonsäureestern Alkohole - an mehreren Stellen über den Reaktor verteilt abgezogen werden (Fahrweise iib). Auf die in WO-A 03/042278 und WO-A 05/042615 beschriebene Gleichstromfahrweise mit einer kontinuierlichen - mindestens an mehreren Stellen erfolgenden - Abführung der Reaktionsdämpfe wird hier ausdrücklich Bezug genommen. Diese Fahrweise hat insbesondere die folgenden Vorteile:
- man kann auf Pumpen zur Beförderung des Produktstroms weitgehend verzichten; der Produktablauf lässt sich als gravimetrischer Fluss einfacher steuern; Der Reaktor kann bei leichtem Überdruck, Normaldruck oder mit einem geringen Unterdruck (siehe oben) gefahren werden
- die kontinuierliche Abführung der Reaktionsdämpfe in situ aus dem Reaktionsgemisch schiebt das Gleichgewicht bei bereits sehr schonender Fahrweise auf die Seite der Reaktionsprodukte. Durch die rasche Abführung der Reaktionsdämpfe werden weiterhin Nebenreaktionen vermieden bzw. zumindest unterdrückt;
- In der Regel lassen sich mit der oben beschriebenen Fahrweise aliphatisch/aromatische Präpolyester mit einer Viskositätszahl nach DIN 53728 von 30 bis 80 cm³/g herstellen. Weiterhin weisen diese Präpolyester sehr niedrige Säurezahlen nach DIN EN 12634 auf.

Die Reaktionsbrüden, die im wesentlichen aus Wasser und bei Einsatz von Dicarbonsäureestern aus Alkohol, aus überschüssigem Diol und Nebenprodukt THF - bei Einsatz des Diols 1,4-Butandiol - bestehen, werden nach üblichen Verfahren destillativ aufgereinigt und in den Prozess wieder zurückgefahren.

Im Polykondensationsschritt iii) wird der vorkondensierte Polyester mit einem Deaktivator für den Katalysator versetzt. Als Deaktivator kommt phosphorige Säure in Betracht. Der Einsatz von Deaktivatoren ist besonders ratsam, wenn hochreaktive Titankatalysatoren eingesetzt werden. Die Deaktivatoren können in einer Menge von 0,001 bis 0,1 Gew.-%, vorzugsweise 0,01 bis 0,05 Gew.-% bezogen auf die Polymermenge nach Stufe iii), zugesetzt werden. Vorzugsweise wird ein Ti/P Verhältnis von 1,3-1,5 : 1 und insbesondere bevorzugt 1,1-1,3 : 1 eingestellt.

Die Polykondensation erfolgt in einem sogenannten Finisher. Als Finisher haben sich insbesondere Reaktoren wie ein Ringscheibenreaktor oder ein Käfigreaktor, wie sie in der US 5779986 und EP 719582 beschrieben sind, als geeignet erwiesen. Insbesondere letzterer trägt der mit zunehmender Reaktionsdauer zunehmenden Viskosität des Polyesters Rechnung. In der Regel werden Reaktionstemperaturen von 220 bis 270°C, vorzugsweise 230 bis 250°C und Drucke von 0,2 bis 5 mbar, vorzugsweise 0,5 bis 3 mbar eingestellt.

Es lassen sich bei Verweilzeiten von 30 bis 90 Minuten, vorzugsweise 40 bis 80 Minuten aliphatisch/aromatische Polyester mit einer Viskositätszahl nach DIN 53728 von 120 bis 180 cm³/g und Säurezahlen nach DIN EN 12634 von 0,5 bis 1,2 vorzugsweise 0,6 bis 0,9 mg KOH/g herstellen. Typische Molekulargewichte (Mn) liegen bei 9000 bis 60000, Molekulargewichte (Mw) bei 50000 bis 250000. Der MVR (Schmelzevolumenrate) liegt in der Regel bei 1,0 bis 15,0 cm³/10 min bevorzugt bei 2,5 bis 12,0 und besonders bevorzugt bei 3,5 bis 10,0 cm³/10 min.

### Messmethoden:

Die Säurezahl wurde nach DIN EN 12634 vom Oktober 1998 bestimmt. Als Lösemittelgemisch wurde eine Mischung aus 1 Volumenteil DMSO, 8 Volumenteile Propan-2-ol und 7 Volumenteile Toluol verwendet. Die Probe wurde auf 50°C erhitzt und mit einer Einstabelektrode mit Kaliumchlorid Füllung verknüpft. Als Maßlösung wurde eine Tetramethylammonium-Hydroxid-Maßlösung verwendet.

Die Bestimmung der Viskositätszahl erfolgt nach DIN 53728 Teil 3, 3. Januar 1985. Als Lösungsmittel wurde das Gemisch: Phenol/Dichlorbenzol im Gewichtsverhältnis 50/50 verwendet.

Die Bestimmung der Schmelze-Volumenfließrate (MVR) erfolgte nach ISO 1133. Die Prüfbedingungen betrugen 190°C, 2,16 kg. Die Aufschmelzzeit betrug 4 Minuten. Der MVR gibt die Geschwindigkeit der Extrusion eines geschmolzenen Kunststoff-Formteils durch ein Extrusionswerkzeug von festgelegter Länge und festgelegtem Durchmesser unter den vorbeschriebenen Bedingungen: Temperatur, Belastung und Lage des Kolbens. Bestimmt wird das in einer festgelegten Zeit extrudierte Volumen im Zylinder eines Extrusionsplastometers.

### Beispiele

### 1. Kontinuierliche Herstellung von Polybutylenadipat-co-terephthalat

Zur Herstellung des biologisch abbaubaren Polyesters wurden 19 kg/h Terephthalsäure, 19 kg/h Adipinsäure, 32 kg/h 1,4-Butandiol und 0,05 kg/h Glycerin bei 35°C physikalisch gemischt und anschließend das Gemisch kontinuierlich in einen Veresterungskessel (z.B. ausgelegt als Hydrozyklon, wie z.B. beschrieben in WO 03/042278 A1) übergeführt. Unter Zugabe von weiteren 16 kg/h 1,4-Butandiol und 0,022 kg/h Tetrabutylorthotitanat (TBOT) wurde das Gemisch bei einer Temperatur von 240°C, einer Verweilzeit von 2,0 h und einem Druck von 0,85 bar verestert und das entstehende Kondensationsprodukt Wasser, sowie Teile des Überschusses an Butandiol abdestilliert. Der so erhaltende niedermolekulare Polyester wies eine Viskositätszahl (VZ) von 14 cm³/g auf.
Anschließend wurde das Reaktionsgemisch unter Zugabe von weiteren 0,012 kg TBOT/h, bei einer von 250 auf 265 °C ansteigenden Temperatur, einer Verweilzeit von 2,5 h und einem von 250 mbar auf 10 mbar sinkendem Druck über eine Fallstromkaskade (wie z.B. beschrieben in WO 03/042278 A1) geführt und der überwiegende Teil an überschüssigem Butandiol abdestiliert. Der so erhaltende Polyester wies eine Viskositätszahl (VZ) von 56 cm³/g auf.
Nach Zugabe von 0, 01 kg/h phosphoriger Säure wurde das Reaktionsgemisch in einen Polykondensationsreaktor (wie z.B. beschrieben in EP 0719582) übergeführt, und bei einer Temperatur von 255°C und einem Druck von 1 mbar für weitere 70 Minuten polykondensiert und der verbleibende Überschuss an Butandiol abdestilliert. Der so erhaltene Polyester wies eine VZ von 158cm³/g und eine Säurezahl (SZ) von 0,70 mg KOH/g auf. Der MVR betrug 12,0 cm³/10 min (190°C, 2,16 kg Gewicht).

## Patentansprüche

1. Verfahren zur kontinuierlichen Herstellung eines biologisch abbaubaren Polyesters auf Basis von aliphatischen oder aliphatischen und aromatischen Dicarbonsäuren und aliphatischen Dihydroxyverbindungen, wobei
eine Mischung aus den aliphatischen Dyhydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden
i) in eine ersten Stufe diese Mischung zusammen mit der Gesamtmenge oder einer Teilmenge eines Titankatalysators kontinuierlich verestert bzw. umgeestert wird;
ii) in einer zweiten Stufe kontinuierlich das gemäß i) erhaltene Umesterungs- bzw. Veresterungsprodukt in einem Turmreaktor und im Gleichstrom über einen Fallfilmverdampfer, wobei die Reaktionsdämpfe in situ aus dem Reaktionsgemisch entfernt werden bis zu einer Viskositätszahl nach DIN 53728 von 20 bis 80 cm³/g vorkondensiert wird;
iii) in einer dritten Stufe kontinuierlich das aus ii) erhältliche Produkt bis zu einer Viskositätszahl nach DIN 53728 von 100 bis 220 cm³/g polykondensiert wird und wobei zwischen Stufe ii) und iii) dem Produktstrom 0,001 bis 0,1 Gew.-% einer deaktivierenden Phosphorverbindung zugefügt werden, wobei die deaktivierende Phosphorverbindung phosphorige Säure ist.

2. Verfahren nach Anspruch 1, wobei der biologisch abbaubare Polyester aufgebaut ist aus:
A) einer Säurekomponente aus
a1) 30 bis 99 mol-% mindestens einer aliphatischen Dicarbonsäure oder deren Ester oder Mischungen davon
a2) 1 bis 70 mol-% mindestens einer aromatischen Dicarbonsäure oder deren Ester oder Mischungen davon und
a3) 0 bis 5 mol-% einer sulfonatgruppenhaltigen Verbindung,
wobei die Molprozente der Komponenten a1) bis a3) zusammen 100% ergeben und
B) einer Diolkomponente aus:
b1) mindestens äquimolare Mengen zur Komponente A eines C₂-bis C₁₂-Alkandiol oder Mischungen davon und
b2) 0 bis 2 Gew.-% bezogen auf die Komponenten A und b1) einer mindestens 3 funktionelle Gruppen enthaltenden Verbindung;
C) 0 bis 30 Gew.-% einer oder mehrerer Komponenten ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure der Formel IIa oder IIb 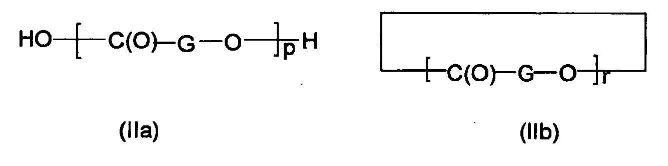 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einer Aminocarbonsäureverbindung ausgewählt aus der Gruppe, bestehend aus Caprolactam, 1,6 Aminocapronsäure, Laurinlactam, 1,12-Aminolaurinsäure und 1,11-Aminoundecansäure oder Mischungen aus c1) bis c5),
D) 0 bis 4 Gew.-% bezogen auf die Polyestermenge nach Stufe iii) eines di- oder oligofunktionellen Epoxids, Oxazolins, Oxazins, Caprolactams und/oder Carbodiimids.

3. Verfahren nach Anspruch 1, wobei der biologisch abbaubare Polyester als aliphatische Dicarbonsäure (Komponente a1)) Bernsteinsäure, Adipinsäure oder Sebacinsäure, deren Ester oder Mischungen davon;
als aromatische Dicarbonsäure (Komponente a2)) Terephthalsäure oder deren Ester;
als Diolkomponente (Komponente B) 1,4-Butandiol oder 1,3-Propandiol, und als Komponente b2) Glycerin, Pentaerythrit, Trimethylolpropan.

4. Verfahren nach den Ansprüchen 1 bis 3, wobei die Veresterung /Umesterung (Stufe i)) - in Form eines Hydrozyklons mit anhängendem Wärmetauscher durchgeführt wird.

5. Verfahren nach einem der Ansprüche 1 bis 4, wobei Stufe iii) in einem Ringscheibenreaktor oder Käfigreaktor durchgeführt wird.

6. Verfahren nach einem der Ansprüche 1 bis 5, wobei zu Beginn, während oder nach Stufe iii) 0 bis 4 Gew.-% bezogen auf die Polyestermenge eines di- oder oligofunktionellen Epoxids, Oxazolins, Oxazins, Caprolactams und/oder Carbodiimids zugegeben wird.

## Claims

1. A process for the continuous production of a biodegradable polyester based on aliphatic or aliphatic and aromatic dicarboxylic acids and on aliphatic dihydroxy compounds, where
a mixture composed of the aliphatic dihydroxy compounds, of the aliphatic and aromatic dicarboxylic acids, and, optionally, of further comonomers (component C) is mixed, without addition of a catalyst, to give a paste, or, as an alternative, the liquid esters of the dicarboxylic acids are fed into the system, as also are the dihydroxy compound and, optionally, further comonomers, without addition of any catalyst,
i) in a first stage, this mixture, together with the entire amount or with a portion of a titanium catalyst, is continuously esterified or, respectively, transesterified;
ii) in a second stage, the transesterification or, respectively, esterification product obtained in i) is continuously precondensed to an intrinsic viscosity of from 20 to 80 cm³/g to DIN 53728 in a tower reactor and concurrently by way of a falling-film evaporator, the reaction vapors being removed in situ from the reaction mixture;
iii) in a third stage, the product obtainable from ii) is continuously polycondensed to an intrinsic viscosity of from 100 to 220 cm³/g to DIN 53728 and where, between stage ii) and iii), from 0.001 to 0.1% by weight of a deactivating phosphorus compound is added to the product stream, where the deactivating phosphorous compound is phosphorous acid.

2. The process according to claim 1, where the biodegradable polyester is composed of:
A) an acid component composed of
a1) from 30 to 99 mol% of at least one aliphatic dicarboxylic acid or its esters, or a mixture thereof,
a2) from 1 to 70 mol% of at least one aromatic dicarboxylic acid or its esters, or a mixture thereof, and
a3) from 0 to 5 mol% of a compound comprising sulfonate groups,
where the total of the molar percentages of components a1) to a3) is 100%, and
B) a diol component composed of:
b1) at least equimolar amounts with respect to component A of a C₂-C₁₂ alkanediol, or a mixture thereof, and
b2) from 0 to 2% by weight, based on components A and b1), of a compound comprising at least 3 functional groups;
C) from 0 to 30% by weight of one or more components selected from
c1) at least one dihydroxy compound comprising ether functions and having the formula I
HO-[(CH₂)ₙ-O]ₘ-H (I)
where n is 2, 3 or 4 and m is a whole number from 2 to 250,
c2) at least one hydroxycarboxylic acid of the formula IIa or IIb 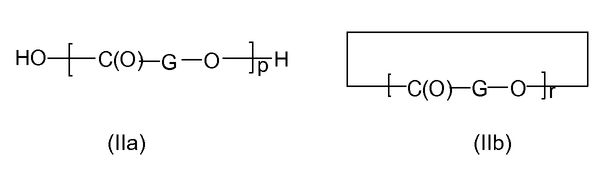 where p is a whole number from 1 to 1500 and r is a whole number from 1 to 4, and G is a radical selected from the group consisting of phenylene, -(CH₂)_{q}-, where q is a whole number from 1 to 5, -C(R)H- and -C(R)HCH₂, where R is methyl or ethyl,
c3) at least one amino-C₂-C₁₂ alkanol, or at least one amino-C₅-C₁₀ cycloalkanol, or a mixture of these,
c4) at least one diamino-C₁-C₈ alkane,
c5) at least one aminocarboxylic acid compound selected from the group consisting of caprolactam, 1,6-aminocaproic acid, laurolactam, 1,12-aminolauric acid, and 1,11-aminoundecanoic acid,
or mixtures composed of c1) to c5),
D) from 0 to 4% by weight, based on the amount of polyester after stage iii), of
a di- or oligofunctional epoxide, oxazoline, oxazine, caprolactam, and/or carbodiimide.

3. The process according to claim 1, where the biodegradable polyester comprises, as aliphatic dicarboxylic acid (component a1)), succinic acid, adipic acid, or sebacic acid, esters thereof, or a mixture of these;
as aromatic dicarboxylic acid (component a2)), terephthalic acid or its esters;
as diol component (component B), 1,4-butanediol or 1,3-propanediol, and,
as component b2), glycerol, pentaerythritol, trimethylolpropane.

4. The process according to claims 1 to 3, where the esterification/transesterification (stage i)) uses a hydrocyclone with attached heat exchanger.

5. The process according to any of claims 1 to 4, where stage iii) is carried out in a rotating-disk reactor or cage reactor.

6. The process according to any of claims 1 to 5, where, at the start of, during, or after stage iii), from 0 to 4% by weight, based on the polyester amount of a di- or oligofunctional epoxide, oxazoline, oxazine, caprolactam, and/or carbodiimide is added.

## Revendications

1. Procédé de fabrication continue d'un polyester biodégradable à base d'acides dicarboxyliques aliphatiques ou aliphatiques et aromatiques et de composés dihydroxy aliphatiques, dans lequel un mélange des composés dihydroxy aliphatiques, des acides dicarboxyliques aliphatiques et aromatiques, et éventuellement de comonomères supplémentaires (composant C) est mélangé en une pâte sans ajout d'un catalyseur ou, en variante, les esters liquides des acides dicarboxyliques et les composés dihydroxy et éventuellement des comonomères supplémentaires sont introduits sans l'ajout d'un catalyseur,
i) lors d'une première étape, ce mélange est estérifié ou transestérifié en continu avec la totalité ou une partie d'un catalyseur au titane ;
ii) lors d'une deuxième étape, le produit de transestérification ou d'estérification obtenu selon i) est pré-condensé en continu dans un réacteur à tour et à co-courant dans un évaporateur à film tombant jusqu'à un indice de viscosité selon DIN 53728 de 20 à 80 cm³/g, les vapeurs de réaction étant éliminées in situ du mélange réactionnel ;
iii) lors d'une troisième étape, le produit pouvant être obtenu en ii) est polycondensé en continu jusqu'à un indice de viscosité selon DIN 53728 de 100 à 220 cm³/g, 0,001 à 0,1 % en poids d'un composé de phosphore désactivant étant ajouté au courant de produits entre les étapes ii) et iii), le composé de phosphore désactivant étant l'acide phosphoreux.

2. Procédé selon la revendication 1, dans lequel le polyester biodégradable est formé à partir de :
A) un composant acide constitué par :
a1) 30 à 99 % en moles d'au moins un acide dicarboxylique aliphatique ou son ester ou des mélanges de ceux-ci,
a2) 1 à 70 % en moles d'au moins un acide dicarboxylique aromatique ou son ester ou des mélanges de ceux-ci, et
a3) 0 à 5 % en moles d'un composé contenant des groupes sulfonate,
les pourcentages en moles des composants a1) à a3) étant ensemble de 100 %, et
B) un composant diol constitué par :
b1) des quantités au moins équimolaires, par rapport au composant A, d'un alcanediol en C₂ à C₁₂ ou de mélanges de celui-ci, et
b2) 0 à 2 % en poids, par rapport aux composants A et b1), d'un composé contenant au moins 3 groupes fonctionnels ;
C) 0 à 30 % en poids d'un ou de plusieurs composants choisis parmi
c1) au moins un composé dihydroxy contenant des fonctions éther de formule I
HO-[(CH₂)ₙ-O]ₘ-H (I)
dans laquelle n représente 2, 3 ou 4 et m représente un nombre entier de 2 à 250,
c2) au moins un acide hydroxycarboxylique de formule IIa ou IIb 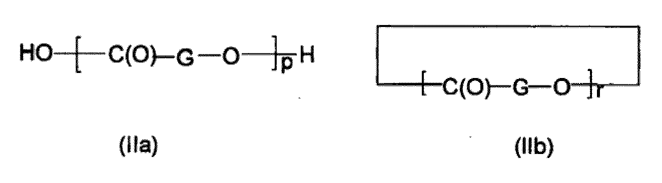 dans lesquelles p signifie un nombre entier de 1 à 1 500 et r signifie un nombre entier de 1 à 4, et G représente un radical choisi dans le groupe constitué par phénylène, -(CH₂)_{q}-, q signifiant un nombre entier de 1 à 5, -C(R)H- et -C(R)HCH₂-, R représentant méthyle ou éthyle,
c3) au moins un amino-alcanol en C₂ à C₁₂ ou au moins un amino-cycloalcanol en C₅ à C₁₀ ou des mélanges de ceux-ci,
c4) au moins un diamino-alcane en C₁ à C₈,
c5) au moins un composé d'acide aminocarboxylique choisi dans le groupe constitué par le caprolactame, l'acide 1,6-aminocaproïque, le laurine-lactame, l'acide 1,12-aminolaurique et l'acide 1,11-aminoundécanoïque,
ou des mélanges de c1) à c5),
D) 0 à 4 % en poids, par rapport à la quantité de polyester selon l'étape iii) d'un époxyde, d'une oxazoline, d'une oxazine, d'un caprolactame et/ou d'un carbodiimide di- ou oligofonctionnel.

3. Procédé selon la revendication 1, dans lequel le polyester biodégradable contient
en tant qu'acide dicarboxylique aliphatique (composant a1)), de l'acide succinique, de l'acide adipique ou de l'acide sébacique, leurs esters ou des mélanges de ceux-ci ;
en tant qu'acide dicarboxylique aromatique (composant a2)), de l'acide téréphtalique ou son ester ;
en tant que composant diol (composant B), du 1,4-butanediol ou du 1,3-propanediol, et
en tant que composant b2), de la glycérine, de la pentaérythrite, du triméthylolpropane.

4. Procédé selon les revendications 1 à 3, dans lequel l'estérification/la transestérification (étape i)) est réalisée sous la forme d'un hydrocyclone avec échangeur de chaleur annexé.

5. Procédé selon l'une quelconque des revendications 1 à 4, dans lequel l'étape iii) est réalisée dans un réacteur à disque annulaire ou un réacteur à cage.

6. Procédé selon l'une quelconque des revendications 1 à 5, dans lequel 0 à 4 % en poids, par rapport à la quantité de polyester, d'un époxyde, d'une oxazoline, d'une oxazine, d'un caprolactame et/ou d'un carbodiimide di- ou oligofonctionnel est ajouté au début, pendant ou après l'étape iii).
